(19) Europäisches Patentamt

European Patent Office

Office européen des brevets

(11) **EP 1 365 882 B1**

(12) **EUROPEAN PATENT SPECIFICATION**

(45) Date of publication and mention
of the grant of the patent:
**27.10.2004 Bulletin 2004/44**

(21) Application number: **02722267.8**

(22) Date of filing: **01.03.2002**

(51) Int Cl.⁷: **B23K 35/28**, B32B 15/01,
C22C 21/00, C22F 1/04

(86) International application number:
**PCT/EP2002/003319**

(87) International publication number:
**WO 2002/070189 (12.09.2002 Gazette 2002/37)**

(54) **HIGH TEMPERATURE ALUMINUM ALLOY BRAZING SHEET AND METHODS OF MANUFACTURING AND USES THEREFOR**

HOCHTEMPERATUR HARTLÖTBLECH AUS EINER ALUMINIUMLEGIERUNG UND HERSTELLUNGSVERFAHREN UND VERWENDUNGEN

FEUILLE DE BRASAGE EN ALLIAGE D'ALUMINIUM RESISTANT A DES HAUTES TEMPERATURES, SON PROCEDE DE PRODUCTION ET SON UTILISATION

(84) Designated Contracting States:
**DE ES FR GB SE**

(30) Priority: **02.03.2001 US 272457 P**
**11.05.2001 US 290028 P**
**19.09.2001 US 323076 P**
**11.01.2002 US 347001 P**

(43) Date of publication of application:
**03.12.2003 Bulletin 2003/49**

(73) Proprietor: **Pechiney Rhenalu**
**75116 Paris (FR)**

(72) Inventors:
• **PALMER, Scott**
**Parkersburg, WV 26104 (US)**
• **CONNOR, Zayna, M.**
**Ripley, WV 25271 (US)**
• **GOODRICH, Soctt**
**Millwood, WV 25262 (US)**

(74) Representative: **Mougeot, Jean-Claude**
**PECHINEY**
**Immeuble "SIS"**
**217 ,cours Lafayette**
**69451 Lyon Cedex 06 (FR)**

(56) References cited:
**EP-A- 0 241 125**      **EP-A- 0 718 072**
**EP-A- 0 823 305**      **EP-A- 1 038 984**
**WO-A-82/01014**        **WO-A-94/22633**
**WO-A-98/20178**        **WO-A-99/55925**
**US-A- 5 857 266**

• **PATENT ABSTRACTS OF JAPAN vol. 018, no. 296 (C-1209), 6 June 1994 (1994-06-06) -& JP 06 057361 A (FURUKAWA ALUM CO LTD), 1 March 1994 (1994-03-01)**

**Description**

BACKGROUND OF THE INVENTION

1. Field of the Invention

The present invention relates generally to materials and methods applicable to brazing sheet materials and in particular to aluminum alloys that maintain strength at high temperatures such as those that are required for automotive, vehicular, or industrial heat exchangers, and specifically in charge air coolers, as well as methods for their manufacture and use.

2. Description of Related Art

Strength enhancement of aluminum brazing sheet at room and elevated temperatures is desirable towards downgauging for weight saving and higher operating temperatures in various heat exchanger applications. Aluminum brazing sheet typically includes a core alloy of 3xxx and a lower melting braze clad of 4xxx series. 3xxx and 4xxx are designations as set forth by The Aluminum Association. As 3xxx series aluminum alloys are generally non-heat treatable, solid solution strengthening is the primary source of enhancing as-brazed strength. However, precipitation hardening to some extent is possible if magnesium is present in the core alloy. Age hardening in 3005 based brazing sheets was demonstrated in earlier work. (See for example, N.D.A. Kooij, J.A.H. Söntgerath, A. Bürger, K. Vieregge, A. Haszler, "New High Strength Alloys for Brazing with Long Life Corrosion Properties", VTMS Conf. Proc., Indianapolis, IN 971882 (1997); N.D.A. Kooij, J.A.H. Söntgerath, A. Bürger, K. Vieregge, A. Haszler, "The Development of Two High Strength Aluminum Brazing Sheet Alloys with Long Life Corrosion Properties", Alumitech Conf. Proc., Atlanta, Ga. (1997) p. 185 - 190; patent application WO 99/55925 from Hoogovens Aluminium Walzprodukte "Aluminium alloy for use in a brazed assembly"; and H. Scott Goodrich and G.S. Murty, "Age hardening effects in 3xxx series brazing sheet core alloys", VTMS 4 Conf. Proc., I Mech E 1999, London, p. 483.

One mechanism of age hardening involves (i) diffusion of silicon from the braze clad into the core alloy, (ii) retention of silicon and magnesium in solution during cooling from the braze cycle, and (iii) then the precipitation of $Mg_2Si$ during subsequent vehicle operation or post-braze aging treatment. However, 3xxx alloys are generally not heat treatable , and the primary strengthening mechanism is by solid solution strengthening. It has been reported that age hardening of materials that included Mg in the core material such as 3005 was possible.

In a published study, Goodrich *et al*., "Age hardening effects in 3xxx series brazing sheet core alloys", VTMS 4 Conf. Proc., I Mech E 1999, London, p.483, the aging response of different brazing sheets was monitored through room temperature tensile tests performed immediately after brazing and after aging for various times at 104°C, 150°C, 175°C and 200°C. As the actual heat exchanger operating temperature is generally higher than room temperature, the material properties at elevated temperatures are of interest from a design standpoint. This especially applies to charge air coolers which are used in turbocharged engines and in diesel engines to cool the intake air compressed by the turbocharger prior to its injection into the cylinder chamber. This is done by employing an air-to-air heat exchanger (known in the automobile and truck industry as an inter-cooler or charge-air-cooler). The cooled and compressed air results in maximum performance derived from turbocharging, which lowers emission levels and improves fuel efficiencies. Charge air coolers are exposed to extreme temperature fluctuations and elevations in use, and as such, their construction in terms of metallurgy has proven difficult to design. Standard 3xxx series alloy such as 3003 alloys have been used in the past in some heat exchanger applications since they are easily formed into sheet, fins and tubes. However, they have relatively low strength and generally cannot be used in applications that require subjection to high temperatures. Different aluminum alloys have been used to construct charge air coolers including 3003, but the 3xxx series alloys, while being brazeable, are generally too soft to adequately machine or have the necessary mechanical properties at high temperatures to be acceptable for use in applications such as in charge air coolers. Moreover, the materials must be able to exhibit sufficient strength after long-term exposure to temperatures greater than about 177°C. Many vehicle manufacturers have turned to copper and brass for designing materials useful in the manufacture of charge air coolers since these materials can operate at the temperatures required for a charge air cooler (i.e. up to peak temperatures of about 250-300°C). However, copper and brass are much heavier and costlier than aluminum, and as a result, typically cost more to operate in terms of fuel efficiency given their added weight. Thus it would be desirable to have an aluminum alloy that is suitable for use under the conditions required for charge air coolers without using copper/brass alloys. Since the use of turbocharged engines is increasing in both automobiles and trucks, there have been increasing demands on aluminum alloy suppliers to obtain a material that has good formability and acceptable strength over the complete temperature profile that is required for operating a charge air cooler.

An example of additional strengthening at elevated temperatures in charge air cooler alloys was reported by Raybould and Capriotti LaSalle in US Patent No. 5,857,266, "Heat exchanger having aluminum alloy parts exhibiting high strength at elevated temperatures".

WO 94/22633 discloses a brazing alloy of composition in wt%, of 0.7-1.5 Mn; 0,5-1,0 Cu; not more than 0.4 Fe; not more than 0,15 Si; up to 0.8 Mg; up to 0.3 V and/or Cr; up to 0,1 Ti; others in an amount of up to 0.05 each, 0,15 total ; balance Al.

SUMMARY OF THE INVENTION

In accordance with these and other objects, the present invention provides aluminum alloy brazing sheet materials that have an increase in yield strength when the materials have been exposed to high temperatures for extended periods of time (*i.e.* temperatures of from 100 -250°C or 260°C, for times up to 2500 hours) greater than would have been expected. Such increases in yield strength of the inventive brazing sheet materials may be obtained by subjecting the aluminum alloy to a post braze aging treatment. The increase in yield strength of the core materials is unexpectedly retained, even after the materials are subjected to high temperatures for an extended period of time or when the materials are exposed to very high temperatures that would be found in the case of heat exchanger components, particularly charge air coolers.

In further accordance with the present invention, there is provided a brazing sheet material comprising a core in 3xxx series alloy, of composition (weight %) Si < 0.2%, Fe < 0.2%, Cu: 0.3%-0.7%, Mn: 1.3%-1.7%, Mg: 0.4%-0.8%, Ti < 0.10% and at least one element from the group consisting of Cr (0.05%-0.20%), Sc (0.05%-0.20%), V (0.05%-0.20%), Zr (0.05%-0.20%), Hf (0.05%-0.20%) Ni (0.20%-1%), balance aluminum and unavoidable impurities, wherein the inventive brazing sheet material has been subjected to a treatment sufficient to maintain an increase in strength over a wide temperature range.

The subject-matter of the invention is defined by the appended claims.

BRIEF DESCRIPTION OF THE DRAWINGS

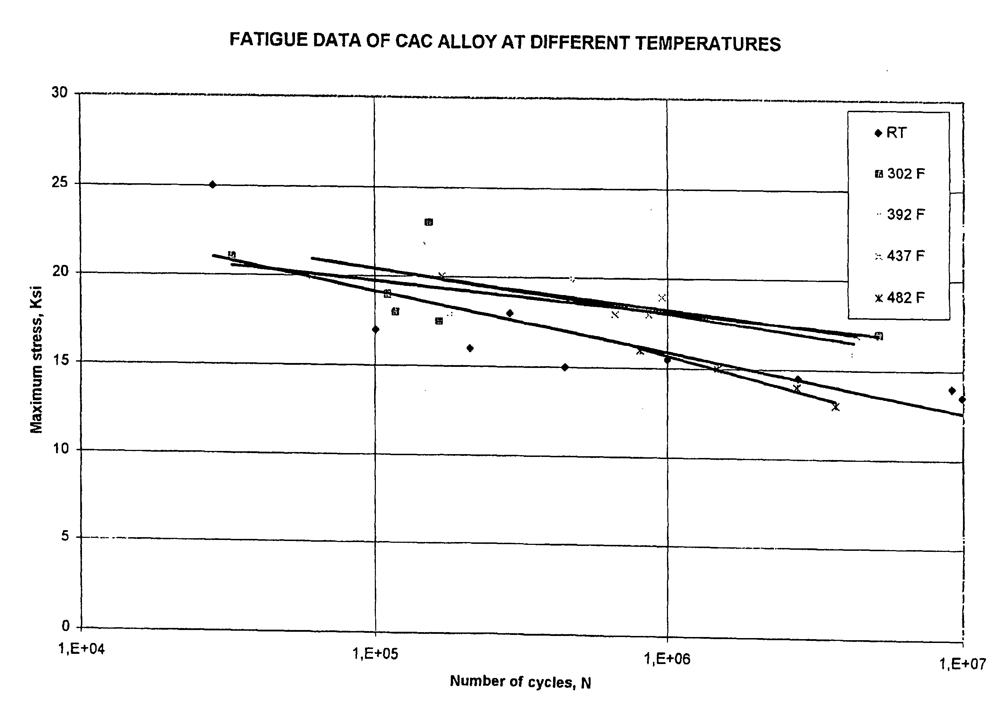

Figure 1 is a graph depicting results from the Example 2.

DETAILED DESCRIPTION OF A PREFERRED EMBODIMENT

The term "peak age" refers to a treatment where a brazing alloy is subjected to a brazing cycle and then aged at various temperatures and times to determine its "peak age," i.e., that time and temperature combination where the maximum strength is observed. For example, tensile properties of a particular material can be evaluated in its as-brazed temper and after aging for various times up to 2500 hours for example, at various temperatures such as 104°C, 175°C, 225°C and 250°C. Any times and temperatures for aging could be utilized in order to determine the peak age for a particular material, the ones listed are merely exemplary. The specimen could then be cooled to room temperature before tensile tests were performed. A specimen from each aging temperature could be tensile tested at room temperature, while another specimen from each aging temperature can be reheated and tensile tested at its respective elevated aging temperatures. The extent of age hardening retained at different operating temperatures can then be evaluated.

In connection with the present invention, it was found that a peak-aged alloy according to the invention shows yield strength at 175°C which is approximately 20 % greater than the as-brazed yield strength at the same temperature. In this regard, to prepare brazing sheet materials, a core alloy that includes a percentage of Mg (i.e. generally at least 0.4-0.7) is brazed with a cladding that includes silicon. During the brazing cycle, a $Mg_2Si$ precipitate is formed by virtue of the Si from the clad migrating to the Mg of the core. The formation of these precipitates detract from the strength of the as-brazed material and hence their usability at high temperatures since the precipitates will coalesce during use when exposed to the kind of extreme temperatures that a charge air cooler will encounter (i.e. over 177°C for period from 10 to 2500 hours, particularly from 50 to 100 hours, or even at temperatures up to 250°C, 260°C or 300°C).

Cr, Zr, Sc, V and Hf are dispersoid forming elements that along with aluminum and silicon precipitate during homogenization to typically form small particles (i.e. from 0.05 - 0.5 μm in diameter). The formation of such precipitates is well known in the art. Note that dispersoid precipitates are formed during homogenization and are usually much smaller than those eutectic constituents formed during casting that are 0.5 - 10 μm, since they are typically the last particles to solidify.

In the alloy of the present invention, the Mg and Mn levels are increased to some degree from those typically employed in a high copper 3003 alloy (i.e., a 3003 alloy that includes an increased Cu content). Mg is included in an amount from 0.4 - 0.8% and Mn is included in an amount from 1.3 - 1.7%. In another embodiment of the present invention, a quantity of Ni is included in the alloy. While typically Ni is not present in brazing sheet materials such as 3003, according to one embodiment of the present invention, Ni is included in an amount from between 0.2 - 1%, more preferably from 0.3 - 0.65%, and suitably, around 0,5% for some embodiments. While Ni is generally not known to be a dispersoid forming element, its inclusion in materials according to the present invention has unexpectedly been found to increase the tensile strength properties of brazing sheet materials.

If Sc is a dispersoid forming element included in the alloy and not a naturally occurring trace, Sc is present in an amount from 0.05-0.2%, preferably from 0.08 - 0.15%;

If V is a dispersoid forming element included in the alloy, and not a naturally occurring trace, V is present in an amount from 0.05-0.2%, preferably from 0.08 - 0.15%;

If Zr is a dispersoid forming element included in the alloy, and not a naturally occurring trace, Zr is present in an amount from 0.05-0.2%, preferably from 0.08 - 0.15%.

If Hf is a dispersoid forming element included in the alloy, and not a naturally occurring trace, Hf is present in an amount from 0.05-0.2%, preferably from 0.08 - 0.15%.

In an alternative embodiment, at least two dispersoid forming elements are included in the brazing sheet core material. In this regard, the inclusion of at least two dispersoid forming elements is believed to provide a synergistic effect in terms of the increase in tensile strength (yield strength). In another embodiment, Ni is included along with a dispersoid forming element. According to one preferred embodiment, the composition of a material according to the present invention comprises:

| **Chemical Composition** (weight percent) | | | | | | | | | |
|---|---|---|---|---|---|---|---|---|---|
| | Alloy | Si | Fe | Cu | Mn | Mg | Cr | Zn | Ti |
| Core Alloy | | <0.2 | <0.2 | 0.3-0.7 | 1.3-1.7 | 0.4-0.8 | 0.05-0.20 | --- | <0.10 |

The material can be subjected, for example, to H24 temper as well known in the industry.
All weights expressed herein are weight percentages based on the total weight of the alloy.
The following examples are provided to further illustrate the invention. These examples do not limit the invention in any form or manner.

Example 1

A material having the following composition:

| Si | Fe | Cu | Mn | Mg | Cr | Ti |
|---|---|---|---|---|---|---|
| 0.03 | 0.04 | 0.46 | 1.65 | 0.72 | 0.12 | 0.03 |

has been cast, clad with 4045 braze alloy, hot rolled to a thickness of 2.8 mm, annealed 2 hours at 371 °C, and cold rolled to 0.305 mm. It has been characterized after being subjected to H24 temper by annealing 2 hours at 282°C (pre-braze), after brazing (post-braze), and after having been subjected to a post-braze-peak-aging; tensile properties were evaluated at different temperatures in the as-brazed temper, in comparison to the peak-aged temper.
The tensile properties (yield strength, ultimate tensile strength, and % elongation) in the pre-brazed temper are reported below:

| Pre-braze (H24 Temper) Tensile properties of Charge Air Cooler alloy | | | |
|---|---|---|---|
| Specimen # | **Pre-braze** | | |
| | **YS**, ksi (MPa) | **UTS**, ksi (MPa) | **% elongation**. |
| 1 | 29.23 (201.5) | 33.24 (229.2) | 6.5 |

(continued)

| Pre-braze (H24 Temper) Tensile properties of Charge Air Cooler alloy | | | |
|---|---|---|---|
| Specimen # | Pre-braze | | |
| | YS, ksi (MPa) | UTS, ksi (MPa) | % elongation. |
| 2 | 29.10 (200.6) | 33.13 (228.4) | 7.9 |
| 3 | 28.95 (199.6) | 32.72 (225.6) | 6.5 |
| 4 | 29.20 (201.3) | 33.27 (229.4) | 7.4 |
| **Mean** | **29.12 (200.8)** | **33.09 (228.2)** | **7.1** |

The tensile properties (yield strength, ultimate tensile strength, and % elongation) in the as-brazed temper at different temperatures are reported below:

| Tensile properties of Charge Air Cooler alloy (New Alloy, As Brazed) | | | | |
|---|---|---|---|---|
| Test Temperature | Specimen # | Post-braze | | |
| | | YS, ksi (MPa) | UTS, ksi (MPa) | % elongation |
| RT | 1 | 13.54 (93.4) | 29.90 (206.2) | 14.0 |
| | 2 | 13.44 (92.7) | 30.05 (207.2) | 14.0 |
| | **Mean** | **13.49 (93.1)** | **29.98 (206.7)** | **14.0** |
| 212°F (100°C) | 1 | 14.35 (98.9) | 26.90 (185.5) | 10.0 |
| | 2 2 | 12.68 (87.4) | 26.67 (183.9) | 12.6 |
| | **Mean** | **13.52 (93.2)** | **26.79 (184.7)** | **11.3** |
| 302°F (150°C) | 1 | 14.37 (99.1) | 26.81 (184.9) | 9.2 |
| | 2 | 14.08 (97.1) | 27.87 (192.2) | 12.0 |
| | **Mean** | **14.23 (98.1)** | **27.34 (188.6)** | **10.6** |

(continued)

| Tensile properties of Charge Air Cooler alloy (New Alloy, As Brazed) | | | | |
|---|---|---|---|---|
| Test Temperature | Specimen # | Post-braze | | |
| | | YS, ksi (MPa) | UTS, ksi (MPa) | % elongation |
| 347°F (175° C) | 1 | 14.04 (96.8) | 25.48 (175.7) | 7.7 |
| | 2 | 13.53 (93.3) | 24.80 (171.0) | 8.6 |
| | **Mean** | **13.79 (95.1)** | **25.14 (173.4)** | **8.2** |
| 392°F (200°C) | 1 | 13.38 (92.3) | 24.10 (166.1) | 13.4 |
| | 2 | 12.77 (88.1) | 23.83 (164.3) | 13.7 |
| | **Mean** | **13.08 (90.2)** | **23.97 (165.2)** | **13.6** |
| 437 (225°C) | 1 | 13.65 (94.1) | 22.17 (152.9) | 11.8 |
| | 2 | 12.90 (88.9) | 21.92 (151.1) | 12.3 |
| | **Mean** | **13.28 (91.5)** | **22.05 (152.0)** | **12.1** |
| 482°F (250°C) | 1 | 12.43 (85.7) | 17.01 (117.3) | 13.0 |
| | 2 | 13.47 (92.9) | 18.63 (128.4) | 10.8 |
| | **Mean** | **12.95 (89.3)** | **17.82 (122.9)** | **11.9** |
| 527°F (275°C) | 1 | 12.66 (87.3) | 14.73 (101.5) | 10.4 |
| | 2 | 11.76 (81.1) | 14.76 (101.8) | 10.9 |
| | **Mean** | **12.21 (84.2)** | **14.75 (101.7)** | **10.7** |

(continued)

| Tensile properties of Charge Air Cooler alloy (New Alloy, As Brazed) | | | | |
|---|---|---|---|---|
| Test Temperature | Specimen # | Post-braze | | |
| | | YS, ksi (MPa) | UTS, ksi (MPa) | % elongation |
| 572°F (300°C) | 1 | 10.28 (70.9) | 10.71 (73.8) | 8.2 |
| | 2 | 10.96 (75.6) | 11.57 (79.8) | 6.4 |
| | **Mean** | **10.62 (73.3)** | **11.14 (76.8)** | **7.3** |
| 617°F (325°C) | 1 | 9.76 (67.3) | 10.63 (73.3) | 7.3 |
| | 2 | 10.31 (71.1) | 10.67 (73.6) | 7.4 |
| | **Mean** | **10.04 (69.2)** | **10.65 (73.5)** | **7.4** |

The table below summarizes the as-brazed results :

| Tensile properties of Charge Air Cooler alloy (New alloy, As brazed) - Summary | | | |
|---|---|---|---|
| Test Temperature | Post-braze | | |
| | YS, ksi (MPa) | UTS, ksi (MPa) | % elong. |
| RT | **13.49 (93.1)** | **29.98 (206.7)** | **14.0** |
| 212°F (100°C) | **13.52 (93.2)** | **26.79 (184.7)** | **11.3** |
| 302°F (150°C) | **14.23 (98.1)** | **27.34 (188.6)** | **10.6** |
| 347°F (175°C) | **13.79 (95.1)** | **25.14 (173.4)** | **8.2** |
| 392°F (200°C) | **13.08 (90.2)** | **23.97 (165.2)** | **13.6** |
| 437°F (225°C) | **13.28 (91.5)** | **22.05 (152.0)** | **12.1** |
| 482°F (250°C) | **12.95 (89.3)** | **17.82 (122.9)** | **11.9** |
| 527°F (275°C) | **12.21 (84.2)** | **14.75 (101.7)** | **10.7** |
| 572°F (300°C) | **10.62 (73.3)** | **11.14 (76.8)** | **7.3** |
| 617°F (325°C) | **10.04 (69.2)** | **10.65 (73.5)** | **7.4** |

The tensile properties (yield strength, ultimate tensile strength, and % elongation) in the peak-aged temper at different temperatures are reported below:

| Tensile properties of Charge Air Cooler alloy (New Alloy, Peak Aged) | | | | |
|---|---|---|---|---|
| **Test Temperature** | **Specimen #** | **Post-braze & peak aged** | | |
| | | **YS, ksi (MPa)** | **UTS, ksi (MPa)** | **% elong.** |
| RT | 1 | 16.19 (111.6) | 30.55 (206.2) | 11.4 |
| | 2 | 15.99 (110.3) | 30.09 (207.2) | 10.8 |
| | **Mean** | **16.09 (111.0)** | **30.32 (206.7)** | **11.1** |
| 212°F (100°C) | 1 | 16.86 (116.3) | 28.24 (194.7) | 8.3 |
| | 2 | 17.38 (119.8) | 28.44 (196.1) | 8.1 |
| | **Mean** | **17.12 (118.1)** | **28.34 (195.4)** | **8.2** |
| 302°F (150°C) | 1 | 17.16 (118.3) | 28.21 (194.5) | 9.8 |
| | 2 | 16.97 (117.0) | 27.51 (189.6) | 9.3 |
| | **Mean** | **17.07 (117.7)** | **27.86 (192.1)** | **9.6** |
| 347°F (175°C) | 1 | 16.46 (113.5) | 25.01 (172.4) | 8.7 |
| | 2 | 16.94 (116.8) | 25.93 (178.8) | 8.9 |
| | **Mean** | **16.70 (115.2)** | **25.47 (175.6)** | **8.8** |
| 392°F (200°C) | 1 | 16.14 (111.3) | 24.48 (168.8) | 11.3 |
| | 2 | 15.77 (108.7) | 24.25 (167.2) | 11.3 |
| | **Mean** | **15.96 (110.0)** | **24.37 (168.0)** | **11.3** |

(continued)

| Tensile properties of Charge Air Cooler alloy (New Alloy, Peak Aged) | | | | |
|---|---|---|---|---|
| **Test Temperature** | **Specimen #** | **Post-braze & peak aged** | | |
| | | **YS, ksi (MPa)** | **UTS, ksi (MPa)** | **% elong.** |
| 437 (225°C) | 1 | 15.61 (107.6) | 21.78 (150.2) | 9.5 |
| | 2 | 15.48 (106.7) | 21.21 (146.2) | 9.8 |
| | **Mean** | **15.55 (107.2)** | **21.50 (148.2)** | **9.7** |
| 482°F (250°C) | 1 | 14.99 (103.4) | 16.31 (112.5) | 6.2 |
| | 2 | 14.65 (101.0) | 17.68 (121.9) | 8.7 |
| | **Mean** | **14.82 (102.2)** | **17.00 (117.2)** | **7.5** |
| 527°F (275°C) | 1 | 13.14 (90.6) | 13.76 (94.9) | 5.2 |
| | 2 | 12.85 (88.6) | 14.01 (96.6) | 6.1 |
| | **Mean** | **13.00 (89.6)** | **13.89 (95.8)** | **5.7** |
| 572°F (300°C) | 1 | 11.25 (77.5) | 11.61 (go.0) | 7.0 |
| | 2 | 11.78 (81.2) | 11.85 (81.7) | 6.0 |
| | **Mean** | **11.52 (79.4)** | **11.73 (80.9)** | **6.5** |
| 617°F (325°C) | 1 | 10.57 (72.9) | 11.39 (78.5) | 7.5 |
| | 2 | 9.78 (67.4) | 10.48 (72.3) | 6.9 |
| | **Mean** | **10.18 (70.2)** | **10.94 (75.4)** | **7.2** |

The table below summarizes the peak-aged results:

| Tensile properties of Charge Air Cooler alloy (New Alloy, Peak Aged) - summary | | | |
|---|---|---|---|
| Test Temperature | Post-braze & Peak Aged | | |
| | YS, ksi (MPa) | UTS, ksi (MPa) | % elong. |
| RT | 16.09 (111.0) | 30.32 (206.7) | 11.1 |
| 212°F (100°C) | 17.12 (118.1) | 28.34 (195.4) | 8.2 |
| 302°F (150°C) | 17.07 (117.7) | 27.86 (192.1) | 9.6 |
| 347°F (175° C) | 16.70 (115.2) | 25.47 (175.6) | 8.8 |
| 392°F (200°C) | 15.96 (110.0) | 24.37 (168.0) | 11.3 |
| 437°F (225°C) | 15.55 (107.2) | 21.50 (148.2) | 9.7 |
| 482°F (250°C) | 14.82 (102.2) | 17.00 (117.2) | 7.5 |
| 527°F (275°C) | 13.00 (89.6) | 13.89 (95.8) | 5.7 |
| 572°F (300°C) | 11.52 (79.4) | 11.73 (80.9) | 6.5 |
| 617°F (325°C) | 10.18 (70.2) | 10.94 (75.4) | 7.2 |

These results show a good level of yield strength of the alloy according to the invention, in the as-brazed temper. All samples tested are above 90 MPa at 175°C, and above 88MPa at 225°C. These levels of yield strength are unexpectedly raised to more than 110 MPa in the post-brazed-peak-aged temper at 175°C, and remain above 100 MPa in the post-braze-peak-aged temper at 250°C. This is of particular interest in Charge Air Cooler applications.

Example 2

Uniaxial constant amplitude fatigue testing at different temperature was performed on Example 1 material according to ASTM-E 466 - 82 standard. A constant amplitude load was applied with R=0.1 and test frequency of 10Hz. Stress range was from 13.5 to 25 ksi (125 to 172 MPa). Specimen dimensions were 0.5 " (12.7 mm) width 2" (50 mm) uniform gauge. 9 samples were tested at room temperature (RT), 6 samples were tested at 302°F (150°C), 5 samples were tested at 392°F (200°C), 5 samples were tested at 437°F (225°C) and 4 samples were tested at 482°F (250°C).

Corresponding results are plotted on Figure 1, and show that the fatigue performance of the alloy according to the invention at high temperature are comparable to its fatigue performance at room temperature. There is no significant loss of fatigue performance at high temperature, which is of particular interest in Charge Air Coolers, where the typical operating temperature is about 177°C.

Example 3 :

Material from Example 1 was tested in terms of SWAAT according to ASTM G85 in two tempers :

    1. as brazed
    2. after a an aging treatment to the peak was performed (Post Braze - Peak-aged).

Six samples were tested in each temper. The data obtained are reported below:

| | Sample # | Number of hours | |
|---|---|---|---|
| (As brazed) | 1 | 1080 | mean |
| | 2 | 1188 | 1214 |
| | 3 | 1356 | |
| | 4 | 1032 | Std. Dev.=140 |
| | 5 | 1260 | |
| | 6 | 1368 | |
| (Post Braze - Peak aged) | 1 | 1236 | mean |
| | 2 | 936 | 1188 |
| | 3 | 1356 | |
| | 4 | 1308 | Std. Dev.=140 |
| | 5 | 1212 | |
| | 6 | 1092 | |

The conclusion from the SWAAT test is that the material according to the invention meets and in fact surpasses the typical performance required for that kind of material, and shows a similar performance as the material without the aging treatment. (Anything greater than about 800 hours is considered in the industry as more than what is required; Typical requirement does not exceed 800 hours).

**Claims**

1. An aluminum alloy brazing sheet material comprising a core alloy and a clad brazing alloy, wherein the core alloy of said material comprises (in weight %):

    Si<0.2    Fe<0.2    Mn: 1.3-1.7    Mg: 0.4-0.8    Cu: 0.3-0.7    Ti<0.1

    and at least one element from the group consisting of Cr (0.05-0.20%), Sc (0.05-0.20%), V (0.05-0.20%), Zr (0.05-0.20%), Hf (0.05-0.20%), Ni (0.20-1%), balance aluminum and unavoidable impurities.

2. An aluminum alloy according to claim 1 wherein at least two elements from the group consisting of Cr, Sc, V, Zr, Hf, Ni, are included.

3. An aluminum alloy brazing sheet material as claimed in claim 1 or 2, wherein Sc is present in an amount from 0.08 to 0.15%.

4. An aluminum alloy brazing sheet material as claimed in claim 1 or 2, wherein V is present in an amount from 0.08-0.15%.

5. An aluminum alloy brazing sheet material as claimed in claim 1 or 2, wherein Zr is present in an amount from 0.08-0.15.

6. An aluminum alloy brazing sheet material as claimed in claim 1 or 2, wherein Ni is present in an amount from 0.3 to 0.65%.

7. An aluminum alloy brazing sheet material as claimed in claims 1 to 6, used at temperatures up to at least 325°C.

8. A method for increasing the yield strength of an aluminum alloy brazing sheet product suitable for Charge Air Cooler application, comprising at least a core alloy and a clad alloy, and wherein the core alloy has a composition in weight percent of: Si < 0.2 Fe<0.2 Mn: 1.3-1.7 Mg: 0.4-0.8 Cu: 0.3-0.7 Ti<0.1, and at least one element from the group consisting of Cr (0.05-0.20), Sc (0.05-0.20), V (0.05-0.20), Zr (0.05-0.20), Hf (0.05-0.20), Ni (0.20-1), balance Al and unavoidable impurities, wherein the method comprises: subjecting said brazing sheet product to a brazing cycle and subjecting the as-brazed sheet product to aging at its peak-aged temperature.

**9.** A method according to claim 8, wherein Ni is present in the core alloy in an amount from 0.3 to 0.65%.

**10.** A charge air cooler prepared from an aluminum alloy brazing sheet product as claimed in claims 1 to 7.

**11.** An aluminum alloy brazing sheet material according to claims 1 to 7, which exhibits a yield strength > 90 MPa at 175°C, when in the as-brazed temper.

**12.** An aluminum alloy brazing sheet material according to claim 11, which exhibits a yield strength > 110 MPa, at 175°C, when in the Post-braze, Peak-aged temper.

**13.** An aluminum alloy brazing sheet material according to claims 1 to 7, which exhibits a yield strength > 88 MPa at 225°C, when in the as-brazed temper.

**14.** An aluminum alloy brazing sheet material according to claims 1 to 7, which exhibits a yield strength > 100 MPa at 225°C, when in the Post-braze-Peak-aged temper.

**15.** An aluminum alloy brazing sheet material according to claims 1 to 7, which exhibits a yield strength in the peak aged temper higher than as in the as-brazed temper by 20% at 225°C.

**Patentansprüche**

**1.** Ein lotplattiertes Blechprodukt aus Aluminiumlegierung bestehend aus einer Kernlegierung und einer plattierten Hartlotlegierung, wobei die Kernlegierung des besagten Produktes folgendes (in Gewicht %) beinhaltet: Si < 0,2 Fe < 0,2 Mn: 1,3 - 1,7 Mg: 0,4 - 0,8 Cu: 0,3 - 0,7 Ti < 0,1 und mindestens ein Element aus der Gruppe bestehend aus Cr (0,05 - 0,20 %), Sc (0,05 - 0,20 %), V (0,05 - 0,20 %), Zr ( 0, 05 - 0,20 %), Hf (0,05 - 0,20 %), Ni (0,20 - 1 %), Ausgleichsaluminium und unvermeidbare Verunreinigungen.

**2.** Eine Aliminiumlegierung nach Anspruch 1, wobei mindestens zwei Elemente von der aus Cr, Sc, V, Zr, Hf und Ni bestehenden Gruppe enthalten sind.

**3.** Ein lotplattiertes Blechprodukt aus Aluminiumlegierung nach einem der Ansprüche 1 oder 2, wobei Sc in einer Menge von 0,08 bis 0,15 % vorhanden ist.

**4.** Ein lotplattiertes Blechprodukt aus Aluminiumlegierung nach einem der Ansprüche 1 oder 2, wobei V in einer Menge von 0,08 bis 0,15 % vorhanden ist.

**5.** Ein lotplattiertes Blechprodukt aus Aluminiumlegierung nach einem der Ansprüche 1 oder 2, wobei Zr in einer Menge von 0,08 bis 0,15 % vorhanden ist.

**6.** Ein lotplattiertes Blechprodukt aus Aluminiumlegierung nach einem der Ansprüche 1 oder 2, wobei Ni in einer Menge von 0,3 bis 0,65 % vorhanden ist.

**7.** Ein lotplattiertes Blechprodukt aus Aluminiumlegierung nach den Ansprüchen 1 bis 6, das bei Temperaturen bis mindestens 325°C eingesetzt wird.

**8.** Eine Methode zur Erhöhung der Streckgrenze eines lotplattierten Blechprodukts aus Aluminiumlegierung, das für Anwendungen von Ladeluftkühlern geeignet ist und das mindestens eine Kernlegierung und eine plattierte Legierung beinhaltet, und wobei die Kernlegierung die folgende Zusammensetzung in Gewichtsprozent beinhaltet: Si < 0,2 Fe < 0,2 Mn: 1,3 - 1,7 Mg: 0,4 - 0,8 Cu: 0,3 - 0,7 Ti < 0,1 und mindestens ein Element aus der Gruppe bestehend aus Cr (0,05 - 0,20), Sc (0,05 - 0,20), V (0,05 - 0,20), Zr (0,05 - 0,20), Hf (0,05 - 0,20), Ni (0,20 - 1), Ausgleichsaluminium und unvermeidbare Verunreinigungen, wobei die Methode folgendes beinhaltet: besagtes lotplattiertes Blechprodukt wird einem Lotzyklus unterzogen und das rohe Blechprodukt wird einem maximalem Aushärten mit seiner maximalen Aushärtungstemperatur unterzogen.

9. Eine Methode nach Anspruch 8, wobei Ni in der Kernlegierung in einer Menge von 0,3 bis 0,65 % vorhanden ist.

10. Ein Ladeluftkühler, wobei der aus einem lotplattierten Blechprodukt aus Aluminiumlegierung nach Ansprüchen 1 bis 7 angefertigt wird.

11. Ein lotplattiertes Blechprodukt aus Aluminiumlegierung nach Ansprüchen 1 bis 7, das eine Streckgrenze > 90 MPa bei 175 °C zeigt, wenn es sich im gelöteten Werkstoffzustand befindet.

12. Ein lotplattiertes Blechprodukt aus Aluminiumlegierung nach Anspruch 11, das eine Streckgrenze > 110 MPa bei 175 °C zeigt, wenn es sich im gelöteten, maximal ausgehärteten Werkstoffzustand befindet.

13. Ein lotplattiertes Blechprodukt aus Aluminiumlegierung nach Ansprüchen 1 bis 7, das eine Streckgrenze > 88 MPa bei 225 °C zeigt, wenn es sich im gelöteten Werkstoffzustand befindet.

14. Ein lotplattiertes Blechprodukt aus Aluminiumlegierung nach Ansprüchen 1 bis 7, das eine Streckgrenze > 100 MPa bei 225 °C zeigt, wenn es sich im gelöteten, maximal ausgehärteten Werkstoffzustand befindet.

15. Ein lotplattiertes Blechprodukt aus Aluminiumlegierung nach Ansprüchen 1 bis 7, das eine Streckgrenze im maximal ausgehärteten Werkstoffzustand zeigt, die höher ist als im gelöteten Werkstoffzustand mit 20 % bei 225 °C.

## Revendications

1. Matériau de tôle pour brasage en alliage d'aluminium comprenant un alliage d'âme et un alliage de brasage plaqué, dans lequel l'alliage d'âme dudit matériau comprend (en % en poids) :
   Si < 0,2, Fe < 0,2, Mn : 1,3 à 1,7, Mg : 0,4 à 0, 8, Cu : 0,3 à 0,7, Ti < 0,1
   et au moins un élément du groupe constitué de Cr (0,05 à 0,20 %), Sc (0,05 à 0,20 %), V (0,05 à 0,20 %), Zr (0,05 à 0,20 %), Hf (0,05 à 0,20 %), Ni (0,20 à 1 %), le reste étant de l'aluminium et des impuretés inévitables.

2. Alliage d'aluminium selon la revendication 1, dans lequel au moins deux éléments du groupe constitué de Cr, Sc, V, Zr, Hf, Ni sont inclus.

3. Matériau de tôle pour brasage en alliage d'aluminium selon la revendication 1 ou 2, dans lequel Sc est présent en une quantité de 0,08 à 0,15 %.

4. Matériau de tôle pour brasage en alliage d'aluminium selon la revendication 1 ou 2, dans lequel V est présent en une quantité de 0,08 à 0,15 %.

5. Matériau de tôle pour brasage en alliage d'aluminium selon la revendication 1 ou 2, dans lequel Zr est présent en une quantité de 0,08 à 0,15 %.

6. Matériau de tôle pour brasage en alliage d'aluminium selon la revendication 1 ou 2, dans lequel Ni est présent en une quantité de 0,3 à 0,65 %.

7. Matériau de tôle pour brasage en alliage d'aluminium selon les revendications 1 à 6, utilisé à des températures allant jusqu'à au moins 325°C.

8. Procédé pour augmenter la limite d'élasticité d'un produit de tôle pour brasage en alliage d'aluminium adapté pour une application de refroidisseur d'air de suralimentation, comprenant au moins un alliage d'âme et un alliage plaqué, et dans lequel l'alliage d'âme a une composition en pour cent en poids de : Si < 0,2, Fe < 0,2, Mn : 1,3 à 1,7, Mg : 0,4 à 0,8, Cu : 0,3 à 0,7, Ti < 0,1, et au moins un élément du groupe constitué de Cr (0,05 à 0,20), Sc (0,05 à 0,20), V (0,05 à 0,20), Zr (0,05 à 0,20), Hf (0,05 à 0,20), Ni (0,20 à 1), le reste étant Al et des impuretés inévitables, dans lequel le procédé comprend les étapes consistant à : soumettre ledit produit de tôle pour brasage à un cycle de brasage et à soumettre le produit de tôle à l'état brasé à un revenu à sa température de revenu optimal.

9. Procédé selon la revendication 8, dans lequel Ni est présent dans l'alliage d'âme en une quantité de 0,3 à 0,65 %.

10. Refroidisseur d'air de suralimentation préparé à partir d'un produit de tôle pour brasage en alliage d'aluminium selon les revendications 1 à 7.

11. Matériau de tôle pour brasage en alliage d'aluminium selon les revendications 1 à 7, qui présente une limite d'élasticité > 90 MPa à 175°C, quand il est à l'état brasé.

12. Matériau de tôle pour brasure en alliage d'aluminium selon la revendication 11, qui présente une limite d'élasticité > 110 MPa à 175°C, quand il est à l'état de revenu optimal post-brasage.

13. Matériau de tôle pour brasage en alliage d'aluminium selon les revendications 1 à 7, qui présente une limite d'élasticité > 88 MPa à 225°C, quand il est à l'état brasé.

14. Matériau de tôle pour brasage en alliage d'aluminium selon les revendications 1 à 7, qui présente une limite d'élasticité > 100 MPa à 225°C, quand il est à l'état de revenu optimal post-brasage.

15. Matériau de tôle pour brasage en alliage d'aluminium selon les revendications 1 à 7, qui présente une limite d'élasticité à l'état de revenu optimal supérieure de 20 % à celle à l'état brasé, à 225°C.

# FATIGUE DATA OF CAC ALLOY AT DIFFERENT TEMPERATURES

EP 1 365 882 B1